# EUROPEAN PATENT SPECIFICATION

(11) **EP 2 676 840 B1**
(45) Date of publication and mention of the grant of the patent: **11.03.2020**
(21) Application number: 13169607.2
(22) Date of filing: 29.05.2013
(51) Int. Cl.: B60Q 1/50, B60Q 1/26, G09F 21/04

(54) **A luminous electronic device for vehicles, for displaying information on an inside condition of the vehicle to persons outside the vehicle**
Leuchtende elektronische Vorrichtung für Fahrzeuge zum Anzeigen von Informationen über einen inneren Zustand des Fahrzeuges für Personen außerhalb des Fahrzeugs
Dispositif électronique d'éclairage pour véhicules, permettant d'afficher des informations sur l'état intérieur du véhicule pour les personnes à l'extérieur du véhicule

(30) Priority: 22.06.2012 ES 201200613 U
(43) Date of publication of application: 25.12.2013
(73) Proprietor: Traffic Futura 2007, S.L.U., 46290 Alcacer (ES)
(72) Inventor: Cortes Rodriguez, Eugenio, 46026 Valencia (ES); Maria Garcia, Jesus, 46011 Valencia (ES)
(74) Representative: Dosterschill, Peter

(56) References cited:
- WO-A2-2006/031580
- DE-A1-102005 042 675
- ES-U- 1 069 628
- US-A- 5 905 434
- US-A1- 2005 046 595
- US-A1- 2009 033 648

## Description

### TECHNICAL FIELD OF THE INVENTION

The present invention lies within the technical field of luminous electronic information devices, particularly being related to a luminous electronic device of the kind including light emitting diodes, for vehicles, the purpose of which is to display information on the condition of the vehicle to persons who outside the vehicles.

### BACKGROUND OF THE INVENTION

At present, the indication of the status of availability towards possible users with special relevance in public-service type vehicles is based on the use of printed signs with specific messages as for example inside conditions of the vehicle such as "free" and/or "occupied" in the case of taxis, which are reinforced to a higher or lower degree with external light sources located on the roofs of the vehicles themselves.

Thus, said signs when shaped as a folding panel (fixed or rotatable), have the main inconvenience of being handled directly by the driver, thereby reducing his/her attention to driving or the service rendered.

Further, this kind of solutions frequently implies operating failures generally due to vibrations and blows caused by the vehicle's travel as, for instance, when the signs fall down spontaneously or the panels rise or descend during the travel.

On the other hand, it has the inconveniences related to visibility of the message and those due mainly to glaring produced by day light to the possible users, as for instance when the said light reflects on the windshield of the vehicle.

To the contrary, at night the sign lights the inside; said light may dazzle the driver whilst, otherwise, if it is not illuminated in an adequate manner, users will not be able to visualize the status of said sign.

In some case such as that of taxis, this information has been traditionally reinforced by means of a light position on the roof of the vehicle which, in many cases, is difficult to distinguish due to the effects of sun light which or annuls it or causes the impression of it being switched on when in reality it is switched off.

To relieve said problems, there is known a plurality of devices intended to mitigate said

### Amended description pages

effects by means of luminescent signals in the text to be used. An example thereof is the utility model ES 1 069 628 U of the same applicant, which discloses a luminous information device for vehicles that, being provided for presentation of any kind of message, text or motif from the inside of the vehicle and making it perfectly visible from the outside, preferably provided for the application thereof in the taxi sector, is characterized in that it is constituted by a screen with luminous elements to guarantee the visibility of the motif to be presented under any kind of light condition of the ambient or environment, with the particularity that said screen is complemented by control actuators for activation/deactivation of the motif which are operable form the inside of the vehicle that jointly are a part of a structure with means for fixing and anchoring to a particular part of the vehicle itself or the enclosure to which it is applied.

US 2009/033648A1 (PODD GEORGE [US] ET AL) 5 February 2009 (2009-0205) discloses a light film apparatus having an illuminated graphics panel with at least two segments that can be individually powered. A controller manages a power which is delivered from a power supply to each of the segments, so that each of the segments is either powered on, powered off or powered to an intermediate level. The known light film apparatus comprises a control module, including a mode switch or a first sensor, a dim switch or a second sensor, a motion switch or a third sensor and a light switch and a fourth sensor.

DE 10 2005 042 675 A1 (MAN Nutzfahrzeuge AG) 22.03.2007 discloses a brightness control of a vehicle depending upon the time of the day and/or weather conditions such as darkness, cloudiness, rain, snow, and/or fog. A lighting source is coupled to an output area which is arranged outside the vehicle whereby at least one output area is part of a position light of the vehicle or part of a license plate of the vehicle.

### DESCRIPTION OF THE INVENTION

The technical problem solved by the present invention is the present reduced efficiency of the luminous information means of vehicles, especially for public transport vehicles, preferably for taxis, for which purpose the object of the present invention provides a significant improvement of said efficiency both with respect to the display of the message and especially to correct visibility thereof to possible users under any condition of outdoor light and atmosphere, whereby it is especially applicable to the particular case of taxis. For this purpose, the luminous electronic device for vehicles being the object of the present invention is characterized in that it uses a plurality of light emitting diodes which are associated to control means that are able to illuminate and/or display information as wished, for example when the vehicle is free or occupied, text message such as "free" in a local language.

Particularly, the invention is a luminous electronic information device for displaying information on at least one inside condition of a vehicle to persons outside the vehicle in a visible manner under differing conditions of outside ambient light with
at least one display for showing the information so that it is visible from outside the vehicle;
a luminous element for illuminating the displayed information;
electronic control means connected to the luminous element and power connecting means for connecting a power input of the device to a power output of the vehicle;
at least one control actuator for activation/deactivation of the luminous elements;
fixing means for fixing the device at an inside portion of a window of the vehicle;
whereby it comprises
a first support where a plurality of light emitting diodes emulating the information to be shown is arranged, the light emitting diodes being connected to the control means and designed to emit light in a plurality of brightness modes;
a logic control unit, such as for example a programmable integrated circuit microprocessor, comprised in the control means and connected to a switching means for selection of at least two brightness modes, said logic control unit being designed to regulate the brightness mode of the light emitting diodes as a function of said selection made by the switching means;
a front plate arranged over the first support and over the light emitting diodes, through which the displayed information emulated by the light emitting diodes is visible through said window of the vehicle;
a second support holding the first support and said front plate;
whereby the control means comprise automatic brightness control means connected to the logic control unit and additional connecting means for connecting the brightness control means to a switching circuit for activating lights of the vehicle, and the brightness control means are designed to automatically activate the logic control unit to make the light emitting diodes in a low brightness mode when detecting that the lights of the vehicle are switched on and in a high brightness mode when detecting that the lights of the vehicle are switched off; characterized in that
   - the second support is a housing into which said first support with said light emitting diodes, said control means and said front plate are built-in and
   - the switching means (8) are a pushbutton and said logic control unit (12) is designed to discriminate spaces of time during which the pushbutton is being pushed, and to regulate the brightness mode of the light emitting diodes (2) as a function of said spaces of time.

The logic control unit is a programmable integrated circuit microprocessor.

The light emitting diodes (LED) are preferably of InGaNi technology with high luminous yield, and they have sufficient luminous intensity to guarantee an excellent visibility from any angle and external conditions of ambient light, having a reduced size, this allowing to adapt them to space as available and maintaining legibility of the characters that compose the message to be displayed. Preferably, the light emitting diodes are arranged to emulate a least one letter of a word.

The brightness of the LED integrated in the device is controlled in such a manner that it facilitates its use at nighttime, by presenting clear and visible information to possible users under any circumstance of visibility, without dazzling o being detrimental to the driving conditions of the vehicle.

The LED brightness can be controlled manually by using a switch, such as a pushbutton. Alternatively or complementarily, brightness of the device and thus of the LED can be activated automatically by the simple activation/deactivation of the vehicle lights, even when the vehicle lights are actuated manually. Thus, the control means comprise automatic brightness control means connected to the logic control unit and additional connecting means for connecting the brightness control means to a switching circuit for activating lights of the vehicle, and the brightness control means are designed to automatically activate the logic control unit to make the light emitting diodes in a low brightness mode when detecting that the lights of the vehicle are switched on and in a high brightness mode when detecting that the lights of the vehicle are switched off. According to this embodiment, the device comprises a USB-type input to which said logic control unit and brightness control means are connected. In this case, the power connecting means for connection to the power output of the vehicle and the additional connecting means for connecting the brightness control means to said switching circuit for activating lights of the vehicle may be wire connections comprised in a USB-type cable comprising two wires for connection of the USB-type connector to the power output of the vehicle and two wires for connecting the USB-type input to the brightness control means.

The device may be connected to the power output of the vehicle in a permanent manner or by means of a connector for the cigarette lighter of the vehicle. The connection and disconnection of the device to the electric circuits of the vehicle by a USB-type connector of the vehicle, as for example on its dashboard
by means of a plurality of fastenings and/or by means of suction pads when the device is to be secured it to the inner side of the windshield of the vehicle.

Thus advantageously, the invention provides a device with limited dimensions and low power consumption, and which is easy-to-use, as the manual operation requires pushing one single switch, and automatic operation thereof is enabled.

Along the description and claims, the word "comprise" and the variants thereof are not pretended to exclude other technical characteristics, components or steps. For experts in the art, other objects, advantages and characteristics of the invention will arise from the description. The following examples are provided in an illustrative manner and which are not pretended to be limiting the present invention. Further, the present invention covers any possible combinations of the herein indicated particular and preferred embodiments.

### BRIEF DESCRIPTION OF THE DRAWINGS

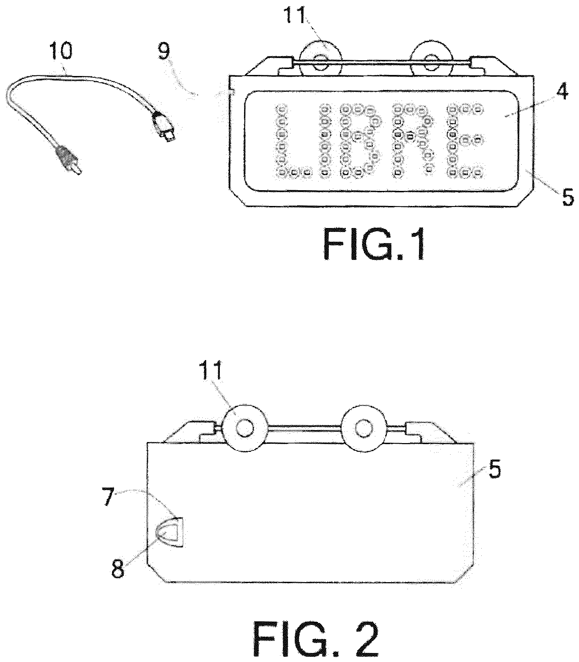

Hereinafter, a series of drawings helping to better understand the invention and which are expressly related to an embodiment of said invention being presented as a nonlimiting example, will be briefly described, where
figure 1 shows a front view of the luminous electronic device for vehicles being the object of the invention;
figure 2 is a rear view of the luminous electronic device for vehicles being the object of the invention;

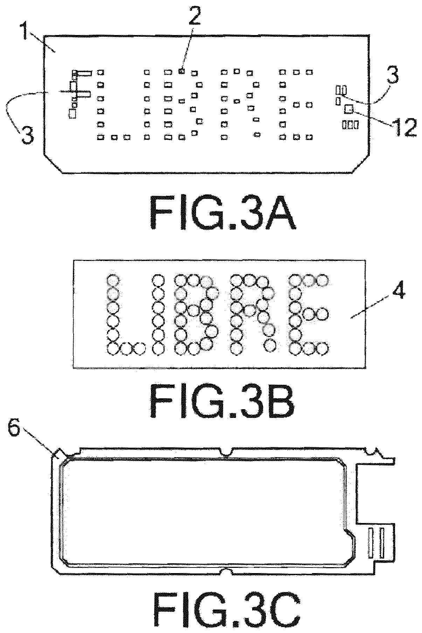

figure 3 shows a view of some of the parts forming the of the luminous electronic device for vehicles, where figure 3A shows the support, figure 3B shows the plastic cover and figure 3C show the sealing joint.

In these figures, there appear references identifying the following elements:
- 1: first support
- 2: light emitting diodes
- 3: control means
- 4: outer screen-printed plate
- 5: housing
- 6: sealing joint
- 7: first opening in the housing
- 8: switch
- 9: second opening in the housing
- 10: power supply cable
- 11: fixing and/or fastening elements
- 12: logic control unit

### EMBODIMENTS OF THE INVENTION

A preferred embodiment of the invention is shown in the appended figures. More specifically, the shown luminous electronic information device for vehicles comprises a first support (1) where light emitting diodes (2) forming the message or information to be shown, and where in turn the electronic control means (3) associated to said diodes (2) which regulate the correct operation of the device, are located.

The electronic control means (3) comprise a logic data processing unit (12) which, in a particular embodiment, is a PIC microcontroller or a similar one, that is configured to discriminate the duration of the pressings exerted on a pushbutton-type switch (8) connected to said logic data processing unit (12) and that acts with respect to the light emitting diodes (2) in accordance with the following way of operation:
(i) Activation and deactivation of the brightness control means for said diodes (2). The diodes may change in brightness depending on the therethrough passing electric current, whereby a first daytime operation mode and a second nighttime mode are established.
(ii) Complete On/Off switching of the device
(iii) Programming of the brightness level of the diodes

Thus, to change the status of the device from a state of low brightness to a state of maximum brightness (both defined by minimum and maximum currents), it is sufficient to press the switch (8) during a time less than one second, to pass alternatively from one state to the other (maximum current through the diodes to minimum current, and vice versa). In this case which could correspond to a state of daytime or nighttime operation, the battery consumption is less than 100 mA for maximum brightness and 15 mA for minimum brightness, so that it may be considered that battery consumption lies within limited and acceptable limits.

It is important to point out that the user may manually switch the device completely off and on. For this purpose, it is sufficient to operate the switch (8) for a time comprised between 1 and 3 seconds.

Finally, programming the minimum brightness of the diodes (2) integrating the device is also carried out by means of the said switch (8). To program the device with the minimum brightness as wished by the user, it is sufficient to press the switch (8) without releasing it for a time of more than 3 seconds. In this way and while the switch (8) is being pressed, brightness will be increasing and decreasing cyclically (i.e. with the switch (8) pressed, the LEDs pass from a minimum brightness to a higher brightness until the maximum is reached, where, if the switch is kept pressed, the LEDs will return to the minimum brightness and the cycle is repeated) until the user releases the switch when the minimum as desired has been reached whereby the selected minimum brightness is memorized in the logic control unit (12).

More specifically and in a practical embodiment of the invention, the diodes (2) of the device automatically lights up in night mode (low brightness) or daytime mode (high brightness) when the vehicle lights are activated or deactivated. In this case, the user may also discretionally vary this brightness level if he/she considers it to be necessary, in the manner stated above i.e. by continuously pressing the switch (8) for more than 3 seconds.

An external board (4) made of plastic or other materials having equivalent mechanical characteristics, with has the screen-printed message "Libre" (=Free) on its front surface, is located over the first support (1) and the LEDs (2), the purpose of which is to protect the LEDs which are located on the first support (1).

All this is conveniently fitted to a second support (5) having the shape of a housing, provided with a sealing joint (6) made of rubber, resin or other material of similar mechanical properties. In its rear portion, said housing (5) has a first opening (7) within which there is located the switch (8) associated to the control means (3), for manual regulation of the brightness of the LEDs by the user.

The housing (5) also has a second opening (9) where the inlet for the power supply cable (10) of the device is located. The power supply cable provides a four wire USB-type connection encompassing wires for power supply and automatic brightness control.

The device is secured to the windshield of the vehicle by means of conventional fastening elements (11) i.e. suction pads arranged at the upper portion of the housing.

## Claims

1. A luminous electronic information device for displaying information on at least one inside condition of a vehicle to persons outside the vehicle in a visible manner under differing conditions of outside ambient light with at least one display for showing the information so that it is visible from outside the vehicle;
a luminous element for illuminating the displayed information;
electronic control means connected to the luminous element and power connecting means for connecting a power input of the device to a power output of the vehicle;
at least one control actuator for activation/deactivation of the luminous elements;
fixing means for fixing the device at an inside portion of a window of the vehicle;
whereby it comprises
a first support (1) where a plurality of light emitting diodes (2) emulating the information to be shown is arranged, the light emitting diodes (2) being connected to control means (3) and designed to emit light in a plurality of brightness modes;
a logic control unit (12) comprised in the control means (3) and connected to a switching means (8) for selection of at least two brightness modes, said logic control unit (12) being designed to regulate the brightness mode of the light emitting diodes (2) as a function of said selection made by the switching means (8);
a front plate (4) arranged over the first support (1) and over the light emitting diodes (2), through which the displayed information emulated by the light emitting diodes (2) is visible through said window of the vehicle;
a second support (5) holding the first support (1) and said front plate (4); whereby
the control means (3) comprise automatic brightness control means connected to the logic control unit (12) and additional connecting means for connecting the brightness control means to a switching circuit for activating lights of the vehicle;
the brightness control means are designed to automatically activate the logic control unit (12) to make the light emitting diodes (2) in a low brightness mode when detecting that the lights of the vehicle are switched on and in a high brightness mode when detecting that the lights of the vehicle are switched off;
**characterized in that**
- the second support (5) is a housing into which said first support (1) with said light emitting diodes (2), said control means (3) and said front plate (4) are built-in, and
- the switching means (8) are a pushbutton and said logic control unit (12) is designed to discriminate spaces of time during which the pushbutton is being pushed, and to regulate the brightness mode of the light emitting diodes (2) as a function of said spaces of time.

2. A luminous electronic information device according to claim 1, **characterized in that**
- the logic control unit (12) is a programmable integrated circuit microprocessor.

3. A luminous electronic information device for vehicles according to claims 1 or 2, **characterized in that**
- it comprises a sealing joint (6) located between said first support (1) and said second support (5).

4. A luminous electronic information device for vehicles according to any of the claims 1 to 3, **characterized in that**
- it comprises a USB-type input (9) to which said logic control unit (12) and brightness control means are connected;
- power connecting means for connection to the power output of the vehicle and the additional connecting means for connecting the brightness control means to said switching circuit for activating lights of the vehicle are wire connections comprised in a USB-type cable comprising two wires for connection of the USB-type connector to the power output of the vehicle and two wires for connecting the USB-type input (9) to the brightness control means.

5. A luminous electronic information device according to any of the preceding claims, **characterized in that**
- the light emitting diodes (2) are arranged to emulate at least one letter of a word.

6. A luminous electronic information device according to any of the preceding claims, **characterized in that**
- the front plate (4) is a screen-printed plate through which said information emulated by the light emitting diodes is visible.

7. A luminous electronic information device according to any of the preceding claims, **characterized in that**
- the control means (3) are located between said first support (1) and said second support (5).

8. A luminous electronic information device for vehicles according to any of claims 4 to 7, **characterized in that**
- the two wires of the power connecting means of the USB-type cable are connected to a connector for connection to a cigarette lighter of the vehicle.

9. A luminous electronic information device for vehicles according to any of claims 4 to 8, **characterized in that**
- the power connecting means are a power supply cable (10) designed for connecting the control means (3) to a power output of a taximeter connected to the power output of the vehicle.

10. A luminous electronic information device according to claim 9, **characterized in that**
- the power supply cable (10) is designed for USB type connection the taximeter.

11. A luminous electronic information device for vehicles according to any of the preceding claims, **characterized in that**
- the light emitting diodes (2) are based on InGaNi technology.

12. A luminous electronic information device according any of the preceding claims, **characterized in that**
- said second support (5) comprises a first opening (7) in which said switching means (8) are located, and a second opening (9) where said power input is located.

## Patentansprüche

1. Leuchtende elektronische Vorrichtung zum Anzeigen von Informationen über mindestens einen Innenraumzustand eines Fahrzeugs für Personen außerhalb des Fahrzeugs unter unterschiedlichen Umgebungslichtbedingungen mit mindestens einer Anzeige zum Anzeigen der Informationen, so dass diese von außerhalb des Fahrzeugs sichtbar sind; mit
- einem Leuchtelement zum Beleuchten der angezeigten Informationen;
- elektronischen Steuermitteln, die mit dem Leuchtelement verbunden sind, und
- Leistungsverbindungsmitteln zum Verbinden eines Leistungseingangs der Vorrichtung mit einem Leistungsausgang des Fahrzeugs;
- mindestens einem Stellantrieb zur Aktivierung/Deaktivierung der Leuchtelemente;
- Befestigungsmitteln zum Befestigen der Vorrichtung an einem Innenabschnitt eines Fensters des Fahrzeugs;
wobei sie aufweist
- einen ersten Träger (1), auf dem eine Vielzahl von lichtemittierenden Dioden (2) angeordnet ist, die darzustellende Information emulieren, wobei die lichtemittierenden Dioden (2) mit Steuermitteln (3) verbunden und ausgelegt sind zum Emittieren von Licht in mehreren Helligkeitsmodi;
- eine Logiksteuereinheit (12), die in den Steuermitteln (3) enthalten ist und mit einer Schalteinrichtung (8) zur Auswahl von mindestens zwei Helligkeitsmodi verbunden ist, wobei die Logiksteuereinheit (12) dazu ausgelegt ist, den Helligkeitsmodus der lichtemittierenden Dioden (2) in Abhängigkeit von der Auswahl zu regeln, die durch die Schalteinrichtung (8) getroffen wird;
- eine Frontplatte (4), die über dem ersten Träger (1) und über den lichtemittierenden Dioden (2) angeordnet ist, durch die die angezeigten Informationen, die von den lichtemittierenden Dioden (2) emuliert werden, durch das Fenster des Fahrzeugs sichtbar sind;
- einen zweiten Träger (5), der den ersten Träger (1) und die Frontplatte (4) hält, wobei die Steuermittel (3) automatische Helligkeitssteuermittel aufweisen, die mit der Logiksteuereinheit verbunden sind, und zusätzliche Verbindungsmittel zur Verbindung der Helligkeitssteuermittel mit einer Schaltvorrichtung zur Aktivierung der Lichter des Fahrzeugs,
- den Helligkeitssteuermitteln, die ausgelegt sind, die Logiksteuereinheit (12) zu aktivieren, um die lichtemittierenden Dioden (2) in einen unteren Helligkeitsmodus zu versetzen, wenn erkannt wird, dass die Lichter des Fahrzeugs abgeschaltet sind, **dadurch gekennzeichnet, dass**
- der zweite Träger (5) ein Gehäuse ist, in das der erste Träger (1) mit den lichtemittierenden Dioden (2), die Steuermittel (3) und die Frontplatte (4) eingebaut sind, und
- die Schalteinrichtung (8) ein Drucktaster ist und die Logiksteuereinheit (12) ausgelegt ist, um Zeiträume zu unterscheiden, in denen der Drucktaster betätigt wird, und um den Helligkeitsmodus der lichtemittierenden Dioden (2) als eine Funktion der Zeiträume zu regeln.

2. Leuchtende elektronische Vorrichtung nach Anspruch 1, **dadurch gekennzeichnet, dass**
- die Logiksteuereinheit (12) ein programmierbarer integrierter Mikroprozessor ist.

3. Leuchtende elektronische Vorrichtung nach Anspruch 1 oder 2, **dadurch gekennzeichnet, dass**
- sie eine Dichtungsverbindung (6) aufweist, die zwischen dem ersten Träger (1) und dem zweiten Träger (5) angeordnet ist.

4. Leuchtende elektronische Vorrichtung nach einem der Ansprüche 1 bis 3, **dadurch gekennzeichnet, dass**
- sie einen USB-Typ-Eingang (9) umfasst, mit dem die Logiksteuereinheit (12) und die Helligkeitssteuereinrichtung verbunden sind;
- Leistungsverbindungsmittel zum Anschließen an die Leistungsabgabe des Fahrzeugs und zusätzliche Verbindungsmittel zum Anschließen der Helligkeitssteuermittel an den Schaltkreis zum Aktivieren der Lichter des Fahrzeugs, die Kabelverbindungen sind, die in einem USB-Kabel enthalten sind, das zwei Drähte zum Anschließen des USB-Eingangs an den Leistungsausgang des Fahrzeugs und zwei Drähte zum Anschließen des USB-Eingangs (9) an das Helligkeitsregelungsmittel aufweist.

5. Leuchtende elektronische Vorrichtung nach einem der vorstehenden Ansprüche, **dadurch gekennzeichnet, dass**
- die lichtemittierenden Dioden (2) angeordnet sind, um mindestens einen Buchstaben eines Wortes zu emulieren.

6. Leuchtende elektronische Vorrichtung nach einem der vorstehenden Ansprüche, **dadurch gekennzeichnet, dass**
- die Frontplatte (4) eine Bildschirmdruckplatte ist, durch die von den lichtemittierenden Dioden (2) emulierte Information sichtbar ist.

7. Leuchtende elektronische Vorrichtung nach einem der vorstehenden Ansprüche, **dadurch gekennzeichnet, dass**
- die Steuermittel (3) zwischen dem ersten Träger (1) und dem zweiten Träger (5) angeordnet sind.

8. Leuchtende elektronische Vorrichtung nach einem der Ansprüche 4 bis 7, **dadurch gekennzeichnet, dass**
- die beiden Drähte der Leistungsverbindungsmittel des Kabels vom USB-Typ mit einem Verbinder zum Anschließen an einen Zigarettenanzünder des Fahrzeugs verbunden sind.

9. Leuchtende elektronische Vorrichtung nach einem der Ansprüche 4 bis 8, **dadurch gekennzeichnet, dass**
- die Leistungsverbindungsmittel ein Leistungsversorgungskabel (10) sind, das zum Verbinden der Steuermittel (3) mit einem Leistungsausgang eines Taximeters ausgelegt ist, welcher an die Ausgangsleistung des Fahrzeugs angeschlossen ist.

10. Leuchtende elektronische Vorrichtung nach Anspruch 9, **dadurch gekennzeichnet, dass**
- das Leistungsersorgungskabel (10) für den USB-Typ-Anschluss des Taximeters ausgelegt ist.

11. Leuchtende elektronische Vorrichtung nach einem der vorstehenden Ansprüche, **dadurch gekennzeichnet, dass**
- die lichtemittierenden Dioden (2) auf InGaNi-Technologie basieren.

12. Leuchtende elektronische Vorrichtung nach einem der vorstehenden Ansprüche, **dadurch gekennzeichnet, dass**
- der zweite Träger eine erste Öffnung (7), in der sich die Schalteinrichtung (8) befindet, und eine zweite Öffnung (9), in der sich die Leistungsaufnahme befindet, aufweist.

## Revendications

1. Dispositif d'information électronique lumineux, destiné à afficher des informations sur au moins un état intérieur de véhicule pour des personnes se trouvant à l'extérieur du véhicule, de manière visible dans différentes conditions de lumière ambiante extérieure, à l'aide d'au moins un dispositif d'affichage destiné à présenter les informations de manière qu'elles soient visibles depuis l'extérieur du véhicule ;
d'un élément lumineux destiné à éclairer les informations affichées ;
de moyens électroniques de commande connectés à l'élément lumineux et de moyens de connexion de puissance destinés à connecter une entrée de puissance du dispositif à une sortie de puissance du véhicule ;
d'au moins un actionneur de commande d'activation/de désactivation des éléments lumineux ;
de moyens de fixation destinés à fixer le dispositif à une partie intérieure de vitre du véhicule ;
de sorte qu'il comprend :
un premier support (1) où est agencée une pluralité de diodes électroluminescentes (2) émulant les informations à présenter, les diodes électroluminescentes (2) étant connectées aux moyens de commande (3) et étant conçues pour émettre de la lumière dans une pluralité de modes de luminosité ;
une unité de commande logique (12) comprise dans les moyens de commande (3) et connectée à un moyen de commutation (8) aux fins de la sélection d'au moins deux modes de luminosité, ladite unité de commande logique (12) étant conçue pour réguler le mode de luminosité des diodes électroluminescentes (2) en fonction de ladite sélection effectuée par le moyen de commutation (8) ;
un panneau avant (4) disposé par-dessus le premier support (1) et par-dessus les diodes électroluminescentes (2), à travers lequel les informations affichées émulées par les diodes électroluminescentes (2) sont visibles à travers ladite vitre du véhicule ;
un second support (5) maintenant le premier support (1) et ledit panneau avant (4) ; de sorte que :
les moyens de commande (3) comprennent des moyens de commande automatique de luminosité, connectés à l'unité de commande logique (12) et des moyens de connexion supplémentaires destinés à connecter les moyens de commande de luminosité à un circuit de commutation destiné à activer des feux du véhicule ;
les moyens de commande de luminosité sont conçus pour activer automatiquement l'unité de commande logique (12) afin de faire passer les diodes électroluminescentes (2) à un mode de faible luminosité lorsqu'ils détectent que les feux du véhicule sont allumés et à un mode de forte luminosité lorsqu'ils détectent que les feux du véhicule sont éteints ;
**caractérisé en ce que** :
- le second support (5) est un boîtier dans lequel sont intégrés ledit premier support (1) avec lesdites diodes électroluminescentes (2), lesdits moyens de commande (3) et ledit panneau avant (4), et
- les moyens de commutation (8) sont un bouton-poussoir et ladite unité de commande logique (12) est conçue pour distinguer des laps de temps pendant lesquels le bouton-poussoir est pressé, et pour réguler le mode de luminosité des diodes électroluminescentes (2) en fonction desdits laps de temps.

2. Dispositif d'information électronique lumineux selon la revendication 1, **caractérisé en ce que** :
- l'unité de commande logique (12) est un microprocesseur à circuit intégré programmable.

3. Dispositif d'information électronique lumineux pour véhicules, selon la revendication 1 ou 2, **caractérisé en ce que** :
- il comprend un joint d'étanchéité (6) situé entre ledit premier support (1) et ledit second support (5).

4. Dispositif d'information électronique lumineux pour véhicules, selon l'une quelconque des revendications 1 à 3, **caractérisé en ce que** :
- il comprend une entrée de type USB (9) à laquelle sont connectés ladite unité de commande logique (12) et lesdits moyens de commande de luminosité ;
- les moyens de connexion de puissance aux fins de la connexion à la sortie de puissance du véhicule et les moyens de connexion supplémentaires destinés à connecter les moyens de commande de luminosité audit circuit de commutation pour activer des feux du véhicule sont des fils de connexion compris dans un câble de type USB comprenant deux fils aux fins de la connexion du connecteur de type USB à la sortie de puissance du véhicule et deux fils destinés à connecter l'entrée de type USB (9) aux moyens de commande de luminosité.

5. Dispositif d'information électronique lumineux selon l'une quelconque des revendications précédentes, **caractérisé en ce que** :
- les diodes électroluminescentes (2) sont agencées pour émuler au moins une lettre d'un mot.

6. Dispositif d'information électronique lumineux selon l'une quelconque des revendications précédentes, **caractérisé en ce que** :
- le panneau avant (4) est un panneau sérigraphié à travers lequel lesdites informations émulées par les diodes électroluminescentes sont visibles.

7. Dispositif d'information électronique lumineux selon l'une quelconque des revendications précédentes, **caractérisé en ce que** :
- les moyens de commande (3) sont situés entre ledit premier support (1) et ledit second support (5).

8. Dispositif d'information électronique lumineux pour véhicules, selon l'une quelconque des revendications 4 à 7, **caractérisé en ce que** :
- les deux fils des moyens de connexion de puissance du câble de type USB sont connectés à un connecteur à des fins de connexion à un allume-cigare du véhicule.

9. Dispositif d'information électronique lumineux pour véhicules, selon l'une quelconque des revendications 4 à 8, **caractérisé en ce que** :
- les moyens de connexion de puissance sont un câble d'alimentation électrique (10) conçu pour connecter les moyens de commande (3) à une sortie de puissance d'un taximètre connecté à la sortie de puissance du véhicule.

10. Dispositif d'information électronique lumineux selon la revendication 9, **caractérisé en ce que** :
- le câble d'alimentation électrique (10) est conçu pour une connexion de type USB du taximètre.

11. Dispositif d'information électronique lumineux pour véhicules selon l'une quelconque des revendications précédentes, **caractérisé en ce que** :
- les diodes électroluminescentes (2) sont fondées sur la technologie de l'InGaNi.

12. Dispositif d'information électronique lumineux selon l'une quelconque des revendications précédentes, **caractérisé en ce que** :
- ledit second support (5) comprend une première ouverture (7) dans laquelle se situent lesdits moyens de commutation (8), et une seconde ouverture (9) où se situe ladite entrée de puissance.
